# EUROPEAN PATENT APPLICATION

(11) **EP 0 674 315 A1**
(43) Date of publication of application: **27.09.1995**
(21) Application number: 95301793.6
(22) Date of filing: 17.03.1995
(51) Int. Cl.: G11B 27/032, G11B 27/10, G03B 15/08, G03B 31/02, G10L 5/00

(54) **Audio visual dubbing system and method**

(30) Priority: 18.03.1994 US 210819
(71) Applicant: AT&T Corp., New York, NY 10013-2412 (US)
(72) Inventor: Chen, Homer H., Lincroft, New Jersey 07738 (US); Chen, Tsuhan, Middletown, New Jersey 07748 (US); Haskell, Barin Geoffrey, Tinton Falls, New Jersey 07724 (US); Petajan, Eric David, Watchung, New Jersey 07060 (US)
(74) Representative: Buckley, Christopher Simon Thirsk

(57) **Abstract**

A system and method for replacing the original sound track of a video or film sequence depicting a dubbee with an audio signal indicative of substituted utterances by a dubber associates frames of a stored or transmitted sequence with facial feature information associated with utterances in a language spoken by the dubber. The frames of the sequence are modified by conforming mouth formations of the dubbee in accordance with the facial feature information using a look up table relating detected dubber utterances to a set of speaker independent mouth formations or actual mouth formations of the dubber. In accordance with the present invention, a viewer of a currently transmitted or previously stored program may manually select between viewing the original broadcast or program or viewing a dubbed version in which a second audio track indicative of utterances in a language different than that of the dubbee is reproduced. Once such a selection is made, the second audio track is utilized to conform the mouth movements of the dubbee to those of someone making the dubber's utterance.

## Description

### Background Of The Invention

### Field of the Invention

This invention relates generally to the recording of audio on the sound tracks of video or film media and, more particularly, to a method and apparatus for conforming the mouth movements of speaking actors depicted or represented in such media to be consistent with those of a speaker of a foreign language to be "dubbed" or substituted therefor.

### Description of the Related Art

Various techniques have been proposed for providing a translation of a video or film sound track into another language. The most common method is dubbing, i.e. substituting audio in the second language for that of the original. For example, in U.S. Patent No. 3,743,391 entitled SYSTEM FOR DUBBING FRESH SOUND TRACKS ON MOTION PICTURE FILM, there is disclosed a dubbing technique in which a video tape recording is made of the original motion picture in synchronization therewith. The tape drives a television display while cue information is recorded on the tape or marked on the motion picture film. The tape is played back, and the cue information is used to prompt the recording of the desired sound information, including the dialog in the other language. The recording of the sound information is done in segments and recorded along different laterally displaced longitudinal areas of the tape or film, and an effort is made to juxtapose the segments so that they correspond to related image recording.

More recently, specialized software programs have been marketed which enable digitized video frame sequences to be stored and manipulated by computer. Utilizing such programs, sequences of video frames can be displayed on a monitor and selected audio signal segments can be precisely aligned with them. Thus, it is now possible to achieve the best possible match between a dubber's speech and an actor's visual cues (e.g. gestures, facial expressions, and the like) in a video frame sequence depicting the corresponding speaking actor or "dubbee".

Regardless of the specific technique employed, however, there are certain limitations associated with foreign language dubbing which cannot be overcome by precise control of audio segment placement. Specifically, the movements of the dubbee's mouth tend to be inconsistent with the dubber's speech. Such inconsistency can be extremely distracting to the viewer, particularly when the types of mouth formations and lip movements are very different in the respective languages.

Accordingly, it is an object of the present invention to provide a visual-audio dubbing technique which makes it possible to conform the mouth movements of the dubbee to the mouth movements associated with the language being substituted. That is, the dubbee's mouth movements are modified so that they are consistent with the utterances of the dubber.

### Summary of the Invention

The aforementioned object, as well as others which will hereinafter become apparent to those skilled in that art, is achieved by an audio-visual dubbing system and method utilizing speech recognition and facial modeling techniques.

A system and method for replacing the original sound track of a video or film sequence depicting a dubbee with an audio signal indicative of substituted utterances by a dubber associates frames of a stored or transmitted sequence with facial feature information associated with utterances in a language spoken by the dubber. The frames of the sequence are modified by conforming mouth formations of the dubbee in accordance with the facial feature information using a look up table relating detected dubber utterances to a set of speaker independent mouth formations or actual mouth formations of the dubber. In accordance with one aspect of the present invention, a viewer of a currently transmitted or previously stored program may manually select between viewing the original broadcast or program or viewing a dubbed version in which a second audio track indicative of utterances in a language different than that of the dubbee is reproduced. Once such a selection is made, the second audio track is utilized to conform the mouth movements of the dubbee to those of someone making the dubber's utterance.

An apparatus for performing audio-visual dubbing in accordance with the present invention includes monitoring means for detecting audio signal portions indicative of dubber utterances. Each signal portion corresponds to a mouth formation or viseme associated with a language spoken by the dubber. By performing speech recognition on each signal portion, it is possible to determine whether the utterance to be associated with a frame corresponds to a phoneme, homophene, or other sound which requires the speaker to utilize a particular, visually recognizable mouth formation. Mouth formation parameters, which are utilized to modify respective frames of the original sequence, may be extracted from images of the dubber or from images of a plurality of different persons uttering the phonemes or other speech segments which coincide with the dubber's speech. In either event, these parameters are de-normalized to the scale of corresponding features in the original frame and texture mapping is performed to obtain a modified frame in which the dubbee appears to be making the utterance attributable to the dubber.

It will, of course, be understood by those skilled in the art that other facial information may be previously extracted and stored for use in conforming the dubbee's appearance to simulate utterance of the speech substituted by the dubber. As such, the present invention may utilize associating means operative to associate positions of the jaw, tongue, and teeth with respective portions of the audio signal.

The various features of novelty which characterize the invention are pointed out with particularity in the claims annexed to and forming a part of this disclosure. For a better understanding of the invention, its operating advantages, and specific objects attained by its use, reference should be had to the drawing and descriptive matter in which there are illustrated and described preferred embodiments of the invention.

### Brief Description Of The Drawings

The features and advantages of the present invention will be more readily understood from the following detailed description when read in light of the accompanying drawings in which:
FIG. 1 is a flowchart depicting the various steps of an illustrative embodiment of a speech assisted audio-visual dubbing technique according to the present invention;
FIG. 2 is a flowchart depicting the various steps of an alternate embodiment of a speech assisted audio-visual dubbing technique according to the present invention;
FIG. 3 is a block diagram showing the various elements of an audio-visual dubbing system constructed in accordance with the present invention; and
FIG. 4 is a block diagram showing the elements of a video display system utilizing the audio visual dubbing technique of the present invention.

### Detailed Description Of The Preferred Embodiments

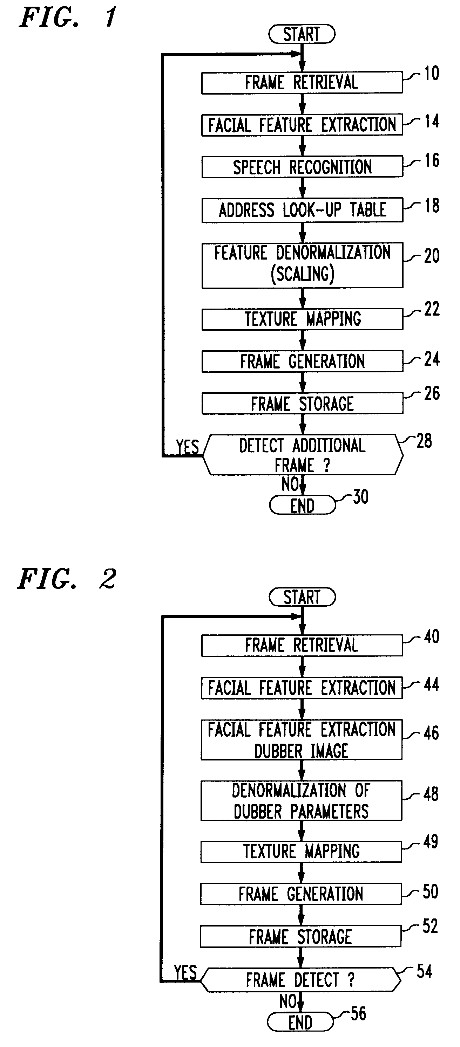

In FIG. 1, block 10 indicates retrieval of a frame of a digitized video sequence depicting at least one speaking person. Techniques for digitizing video or film are well known and commercially available and are not, therefore, deemed to constitute a novel aspect of the present invention. Accordingly, a detailed description of the same has been omitted for clarity. In any event, it will be readily appreciated by those skilled in the art that synchronized with the video sequence is a corresponding original audio signal track representative of the speech and other sounds made by the actor(s) depicted. As indicated above, it is a principal object of the present invention to provide a system and method in which portions of the original audio signal representing the original language of the actors can be replaced or "dubbed" by audio signal portions representative of another language with a minimum of visual distraction to the viewer. In accordance with the technique depicted in FIG. 1, this objective is achieved by modifying the mouth movements and, if desired, other facial features of the actor, to conform with the mouth movements which would be made by a person speaking the language supplied by the dubber.

With continuing reference to FIG. 1, it will be seen in block 14 that feature extraction is performed on a retrieved frame in accordance with a suitable image feature extraction algorithm. An image feature extraction technique specifically concerned with analysis of lips, for example, is described in U.S. Patent No. 4,975,960 issued to Eric D. Petajan on Dec. 4, 1990 and entitled ELECTRONIC FACIAL TRACKING AND DETECTION SYSTEM AND METHOD AND APPARATUS FOR AUTOMATED SPEECH RECOGNITION. During feature extraction, the retrieved frame is analyzed to determine the positions and critical dimensions corresponding to facial features, such as the lips, eyes, and jaw, which predictably vary during speaking. In its simplest form, the analysis is concerned solely with movements of the actor's lips. However, it will be readily ascertained that for more realistic adaptation, the formations of the tongue, teeth, eyes, and jaw should also be considered. It is believed that suitable modeling techniques for this purpose have already been proposed by others and that a detailed discussion of the precise modelling technique is not necessary here. Reference may, however, be had to a paper presented by Shigeo Moroshima et al. at the 1989 ICASSP in Glasgow, UK entitled "An Intelligent Facial Image Coding Driven by Speech and Phoneme", the disclosure of which is expressly incorporated herein by reference. In that paper, there is described a 3-D facial modelling technique in which the geometric surface of the actor's face is defined as a collection of polygons (e.g. triangles).

In any event, once feature extraction has been performed, it will then be possible, in accordance with the present invention, to adapt the frame image of the actor or "dubbee" to simulate utterances in the language of the dubber. According to the embodiment depicted in FIG. 1, the aforementioned adaptation is achieved by analyzing the audio signal portion indicative of the dubber's speech during the frame, as indicated in block 16. The manner in which the dubber's speech is synchronized with the original video frame sequence should not seriously affect the results obtained by the inventive technique disclosed herein. Thus, the dubbing track may be recorded in its entirety in advance and aligned with the video sequence using a commercially available software program such as Adobe Premier, by Adobe Systems Incorporated, or it may be recorded during the frame adaptation process, sequence by sequence. In either case, the speech signal analysis, which may be performed by a conventional speech recognition circuit (not shown), need not be full context-level recognition. This is true because the purpose of the analysis is to break down the dubber's utterance(s) into a sequence of phonemes. Essentially, these phonemes can be mapped into distinct, visible mouth shapes known as visemes. In a simplified version of this embodiment, the audio signal is analyzed to identify homophenes contained in the dubber's utterances. Essentially, a homophene is a set of phonemes that are produced in a similar manner by the speaker such that the positions of the lips, teeth, and tongue are visually similar to an observer. Of course, if a higher degree of performance is required, context level speech recognition may be performed and the phoneme information can be extracted therefrom.

In accordance with the embodiment of FIG. 1, a modified frame is generated by modifying the parametric facial model obtained by feature extraction via the phoneme data obtained by speech recognition. As indicated in block 18, this may advantageously be achieved by addressing a look-up table containing parametric position data corresponding to each viseme. Since preserving picture quality is of substantial importance, the detail of the information contained in the look-up table should contain information relating to particular facial features, such as lip, teeth, and eye positions for each viseme.

The mouth positions that people use to pronounce each phoneme are generally speaker-dependent. Accordingly, the look-up table utilized in block 18 may contain speaker-independent facial feature information. In this event, dubber-speech adaptation of video frame sequences in accordance with the present invention requires de-normalization or scaling of the stored feature information to that obtained from the original frame by image feature extraction, as shown in block 20. De-normalization merely requires determining the position of selected feature points of each relevant facial feature of the speaker and scaling the corresponding look-up table position parameter data accordingly. The location of such feature points about the mouth, for example, is described in the Morishima et al. reference discussed above.

As shown in block 22, once a first phoneme is identified from the audio signal indicative of the dubber's speech and the stored speaker-independent facial features corresponding thereto are de-normalized, incremental texture mapping of facial reflectance data acquired from the original frame is performed to alter the mouth formation of the actor to appear that he or she is uttering the phoneme or homophene. Essentially, texture mapping techniques are well known in the art and may, for example, include interpolating texture coordinates using an affine transformation. For an in-depth discussion of one such technique, reference may be had to a paper by H. Choi et al. entitled "Analysis and Synthesis of Facial Expressions in Knowledge-Based Coding of Facial Image Sequences", *International Conference on Acoustics Speech and Signal Processing*, pp. 2737-40 (1991).

As indicated in blocks 24 and 26, a modified frame is thus generated from the original frame and stored. The foregoing steps are repeated for each frame in the sequence until the end of the sequence is reached, as indicated in steps 28 and 30. It will, of course, be understood by those skilled in the art that various modifications to the embodiment depicted in FIG. 1 are possible. For example, although visemes may be modelled as speaker-independent for the purposes of the present invention, it is possible to enhance the performance of the frame adaptation process. Thus, in a modified embodiment, instead of utilizing the default look-up table containing speaker-independent viseme data as described above, a speaker-dependent look-up table may be derived through analysis of the original audio signal portions that are indicative of phonemes and that correspond to transmitted or stored frames. Each time a phoneme (or other speech parameter indicative of a mouth formation) common to the language of the dubber and dubbee is detected, feature extraction is performed on the corresponding frame image(s) and feature position parameters are stored. In this manner, a speaker dependent table may be constructed for each actor. Of course, it may still be necessary to utilize a look up table in the event phonemes not found in the language of the dubbee are present in the dubber's speech.

Another embodiment of the present invention is depicted in FIG. 2. In accordance with this further embodiment, the mouth formations of the dubbee are conformed to those of the dubber. Thus, as shown in FIG. 2, blocks 40 and 44 are identical to blocks 10 and 14 of FIG. 1. However, instead of performing speech recognition on the audio signal corresponding to the dubber to obtain simulated mouth position parameter data, it is the actual mouth formations of the dubber himself (or herself) which are utilized. That is, the mouth of the dubber is recorded on video during the recording of the dubbing audio portion. Thus, as shown in block 46, image feature extraction is performed on the mouth of the dubber. More particularly, once a temporal relationship is established between the audio speech of the dubber and the frame sequence depicting the dubbee, the facial parameters (i.e. mouth formation data) are extracted on a frame by frame basis. The extracted parameter data is de-normalized (block 48), the original frame is texture mapped (block 49), and a modified frame is generated (block 50). As in the embodiment of FIG. 1, the video sequence is modified frame by frame until the last frame of the sequence has been stored (blocks 52, 54, and 56).

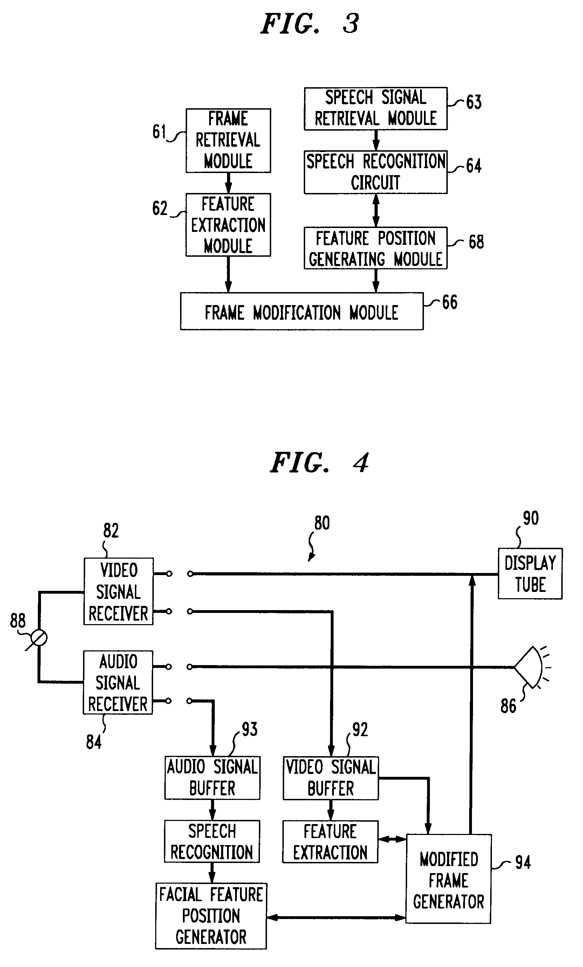

An illustrative audio-visual dubbing system 60 constructed in accordance with an illustrative embodiment of the present invention is depicted in FIG. 3. As shown in FIG. 3, digitized video signals indicative of original video frame sequences are sequentially retrieved by frame retrieval module 61. A feature extraction module 62 performs image feature extraction on each retrieved frame in the manner discussed above. Meanwhile, speech recognition module 64, which may be a conventional speech recognition circuit, analyzes the audio signal to identify the phonemic or homophenic content. As indicated, appropriate visemes and other facial information of the speaker occurring between transmitted frames can be reliably predicted from the phonemic content. It will be readily ascertained by those skilled in the art that to facilitate analysis of the dubber's speech, the audio signal may be previously recorded and synchronized with the video sequence. In the illustrative embodiment depicted in FIG. 3, an audio signal stored in this manner is retrieved from and output to speech recognition module 64 by audio signal retrieval module 63.

As discussed above, when a particular phoneme or homophene is detected in module 64, frame modifying module 66 addresses feature position generating module 68 to obtain facial position parameter data indicative of facial features such as mouth formations (visemes), eye, cheek, and jaw positions, and the like which correspond to features and feature positions of a person uttering the phoneme or homophene. As indicated above, the facial feature information need not be limited to speaker-independent facial feature position parameters and may, in fact, include information obtained by monitoring the phonemic content of the original audio signal representing the dubbee's speech.

Frame modifying module 66, which may be configured to include a conventional video signal generator, utilizes the original frame and the position parameter information provided by module 68 to generate a modified frame. The position parameter data is first de-normalized by the frame modifying module to conform dimensionally to those of the original frame. Modified frames are sequentially stored until an entire sequence has been generated.

With reference now to FIG. 4, there is shown a video display system 80 constructed in accordance with a further modified embodiment of the present invention. In accordance with this additional embodiment, a viewer of a currently transmitted television broadcast or previously stored program may manually select between viewing the original broadcast or program along with a first synchronized audio signal representing the original speech or program or viewing a dubbed version in which a second audio track indicative, representative, or incorporating utterances in a language different than that of the dubbee is reproduced. Once selection is made, the second audio track is utilized to conform the mouth movements of the dubbee to those of someone making the dubber's utterance.

As shown in FIG. 4, the system 80 includes a first receiver 82 for receiving a video signal defining a sequence of frames depicting the dubbee, and a second receiver 84 for receiving a plurality of audio signals synchronized with the video signal. As will be readily ascertained by those skilled in the art, receiver 84 is adapted to receive a first audio signal that corresponds to speech in the language spoken by the dubbee as well as at least one other audio signal also synchronized with the video signal and indicative of utterances in another language supplied by the dubber. Receiver 84 is coupled to sound reproducing means 86 and is adapted to provide one of the received audio signals thereto. A manually operable selector switch 88 permits the viewer to hear the program in his native language by controlling which audio signal track will be supplied to and reproduced by reproducing means 86.

If the viewer wishes to view a program as originally broadcast or stored -- that is, without dubbing -- switch 88 is positioned accordingly and the video signal is processed in a conventional manner and displayed on a suitable display means as the picture tube 90. Similarly, the first audio signal is output to reproducing means 86, which may be configured as one or more conventional audio speakers. If, on the other hand, the viewer wishes to view the program dubbed into another language, the position of switch 88 is changed and operation in accordance with the inventive methods described above is initiated.

If the original video signal is an analog signal, it may be digitized by an A/D converter (not shown). In the embodiment depicted in FIG. 4, it is assumed that the original signal is received in digital form. Thus, as shown, the input video signal is input directly to a buffer 92 which stores the incoming signal portions and supplies them to frame modification means 94 in a conventional manner. Similarly, the input audio signal is input to an audio signal buffer 93. In accordance with one of the techniques discussed above, the respective frames are modified to simulate mouth formations consistent with the utterances of the dubber and these are output to picture tube 90 by frame modification means 94 in a conventional manner.

It will, of course, be readily appreciated by those skilled in the art that a wide variety of modifications may be utilized to even further enhance the quality of video interpolation accorded by the present invention. It should therefore be understood that the invention is not limited by or to the embodiments described above which are presented as examples only but may be modified in various ways within the scope of protection defined by the appended patent claims.

## Claims

1. A system for replacing the original sound track of a video or film sequence formed of a plurality of frames depicting a dubbee, with an audio signal indicative of substituted utterances by a dubber, characterized by:
frame modifying means, responsive to an audio signal associated with utterances of the dubber, for sequentially modifying frames of said sequence to conform therewith; and
means for associating respective portions of said audio signal with facial feature information.

2. The apparatus according to claim 1, further characterized by monitoring means for detecting said audio signal portions, each signal portion corresponding to a mouth formation associated with language spoken by the dubber.

3. The apparatus according to claim 2, characterized in that at least some of said signal portions comprise phonemes.

4. The apparatus according to claim 2, characterized in that at least some of said signal portions comprise homophenes.

5. The apparatus according to claim 2, characterized in that each said mouth formation is a viseme.

6. The apparatus according to claim 2, characterized in that said mouth formations are mouth formations of the dubber.

7. The apparatus according to claim 2, characterized in that said associating means includes a memory having stored therein a speaker-independent table of respective mouth formation parameter data for respective dubber utterances.

8. The apparatus according to claim 2, characterized in that said associating means includes means responsive to said monitoring means for storing dubbee-dependent mouth position parameter data indicative of respective mouth positions as corresponding signal portions are detected by said monitoring means.

9. The apparatus according to claim 2, characterized in that said associating means includes means responsive to said monitoring means for storing dubber-dependent mouth position parameter data indicative of respective mouth positions as corresponding signal portions are detected by said monitoring means.

10. The apparatus according to claim 1, characterized in that said associating means is operative to associate predetermined positions of at least one of the jaw, tongue, and teeth of a speaker with respective portions of the audio signal.

11. A method of replacing the original sound track of a video or film sequence formed of a plurality of frames and depicting a dubbee, with an audio signal indicative of substituted utterances by a dubber, characterized by the steps of:
associating frames of the sequence with facial feature information associated with utterances in a language spoken by the dubber; and
sequentially modifying the frames of the sequence by conforming mouth formations of the dubbee in accordance with said facial feature information.

12. The method of claim 11, characterized in that said associating step includes
monitoring an audio signal portion indicative of an utterance by the dubber and corresponding to a frame of the sequence to be matched with the utterance; and
identifying individual facial feature parameters based on the audio signal portion.

13. The method of claim 12, characterized in that said individual facial feature parameters are derived by image feature extraction from video frames indicative of a person speaking the utterance of the dubber.

14. The method of claim 13, characterized in that said person is the dubber.

15. The method of claim 11, further characterized by the step of storing sets of mouth formation data of the dubber during said utterances and wherein said modifying step includes identifying individual facial features of the dubber corresponding to an utterance associated with a frame of the sequence.

16. A system for displaying video images indicative of a dubbee person speaking one of a plurality of languages, characterized by:
first receiving means for receiving a video signal defining a sequence of frames depicting a dubbee;
second receiving means for receiving a plurality of audio signals, including a first audio signal, synchronized with said video signal and corresponding to speech in the language spoken by the dubbee;
frame modifying means, responsive to a second audio signal synchronized with the video signal and indicative of utterances in another language supplied by the dubber, for sequentially modifying frames of said sequence to conform therewith; and
means for associating respective portions of said audio signal with facial feature information.

17. The system of claim 16, characterized in that said audio and video signals are transmitted in digital form.

18. The system of claim 16, further characterized by buffer means for storing portions of said transmitted video and audio signals and for repetitively supplying portions of the video signal and the second audio signal corresponding to said frame modifying means.

19. The system of claim 17, further characterized by
display means for displaying video images of the dubbee;
speaker means for reproducing said audio signals; and
selection means operatively associated with said frame modification means, said first receiving means, and said second receiving means for operating said display means and speaker means in a first mode in which the frame sequence received by said first receiving means is displayed and said first audio signal is reproduced and in a second mode, in which a frame sequence supplied by the frame modification means is displayed and said second audio signal is reproduced.
